(19) Europäisches Patentamt
European Patent Office
Office européen des brevets

(11) **EP 3 223 004 A1**

(12) **EUROPEAN PATENT APPLICATION**

(43) Date of publication:
**27.09.2017 Bulletin 2017/39**

(51) Int Cl.:
***G01N 27/22*** *(2006.01)*

(21) Application number: **16305354.9**

(22) Date of filing: **25.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Plastic Omnium Advanced Innovation and Research**
**1120 Bruxelles (BE)**

(72) Inventor: **The designation of the inventor has not yet been filed**

(74) Representative: **Remy, Vincent Noel Paul**
**LLR**
**11 boulevard de Sébastopol**
**75001 Paris (FR)**

(54) **SYSTEM AND METHOD FOR CAPACITIVELY SENSING THE DEGREE OF AMMONIA SATURATION IN SOLID STORAGE MEDIUM**

(57)    It is proposed a system for determining the quantity of ammonia gas in a solid storage medium, the system comprising:
- a capacitance sensor for sensing the capacitance of the solid storage medium;
- a measurement device for measuring a dimension of the solid storage medium; and
- processing means, operatively connected to the capacitance sensor and the measurement device, the processing means being configured to determine a dielectric constant of the solid storage medium from said capacitance and said dimension;

The processing means is further configured to determine the quantity of ammonia gas in said solid storage medium on the basis of the dielectric constant.

Figure 2

**Description**

**Field of the Invention**

The present invention relates to a system for determining the quantity of gas in a solid storage medium, a gas-supply device comprising such a system, a vehicle using such a gas-supply device, and an associated method for determining the quantity gas in a solid storage medium. In particular, it also relates to a system and method for sensing the degree of gas saturation in a pellet comprising an alkaline earth-gas complex.

**Background**

Legislation on vehicle and truck emissions stipulates, amongst other things, a reduction in the release of nitrogen oxides $NO_x$ into the atmosphere. One known way to achieve this objective is to use the SCR (Selective Catalytic Reduction) process which enables the reduction of nitrogen oxides by injection of a reducing agent, generally ammonia, into the exhaust line. This ammonia may be obtained by using different techniques. One known technique is based on the use of a solid absorbing matrix where the ammonia is trapped by sorption. Generally, the solid absorbing matrix is stored in a container (or tank) (called hereafter matrix storage container) mounted on the vehicle. According to this known technique, the ammonia is released by heating the solid absorbing matrix, and then the released ammonia is injected into the exhaust line.

Generally, the solid absorbing matrix is stored in a container having a single inlet port. For example, such container(s) can be mounted on a vehicle for SCR (Selective Catalytic Reduction) or fuel cell applications. During a loading or reloading operation, the inlet port is connected to a source of ammonia, typically a highly pressurized cylinder containing liquefied compressed ammonia. The highly pressurized cylinder sends a high pressure of ammonia to the solid absorbing matrix stored inside the container. Sending a high pressure of ammonia in the solid absorbing matrix results in heat generation due to the exothermal sorption reaction.

WO 2006/081824A discloses a solid ammonia storage and delivery material comprising an ammonia absorbing/desorbing solid material, said storage and delivery material having been compacted to a density above 50% of the theoretical skeleton density. Unidirectional compression of $Mg(NH_3)_6Cl_2$ to a density in the range of 1.1-1.2 $g/cm^3$ by applying a pressure of 2-4 $tons/cm^2$ is disclosed, which is above 80% of the theoretically crystal density.

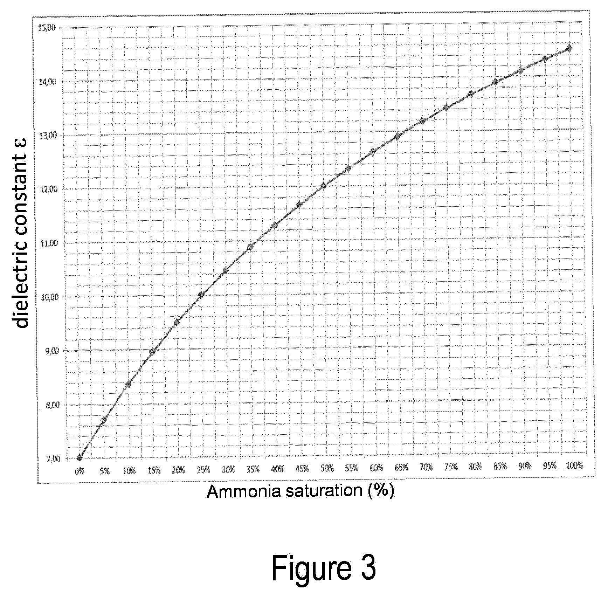

US 2014/0216010A discloses a unidirectionally compacted mixture of expanded natural graphite and ammonia-absorbing salt and that the network created by the recompressed expanded natural graphite forms a robust structure which maintains the salt particles emptied of ammonia, which exhibits an expansion of between 1% and 10% along the compression axis and of the order of 0.01% to 1% perpendicular to the compression axis, see Figure 3.

US 2012/0049852A discloses a method for determining an amount of ammonia in a storage container, the ammonia being stored as a chemical bond to a solid storage medium and being releasable by supplying heat, the method comprising the acts of: measuring an electric capacity of a capacitor, in which capacitor the solid storage medium is a dielectric; and determining the amount of ammonia stored in the storage as a function of the measured capacity. Although US 2012/0049852A discloses a method for determining an amount of ammonia in a storage medium comprising measuring an electric capacity of a capacitor of which the storage medium is a dielectric, this method fails to take into consideration the fact that the storage medium changes dimensionally as gas is absorbed or desorbed, which impacts the distance between the electrodes thereby affecting the capacitance observed and hence the dielectric constant calculated.

**Summary**

According to an aspect of the present invention, there is provided a system for determining the quantity of gas in a solid storage medium, the system comprising: a capacitance sensor for sensing the capacitance of the solid storage medium; a measurement device for measuring a dimension of the solid storage medium; and processing means, operatively connected to the capacitance sensor and the measurement device, the processing means being configured to determine a dielectric constant of the solid storage medium from the capacitance and the dimension; wherein the processing means is further configured to determine the quantity of gas in the solid storage medium on the basis of the dielectric constant.

The dimension to be measured is a dimension that is subject to change as the solid storage medium absorbs/desorbs gas, and which accordingly has an influence on the capacitance that can be sensed between a pair of electrodes fixedly arranged on different parts of said solid storage medium, said solid storage medium acting as the dielectric of a capacitor.

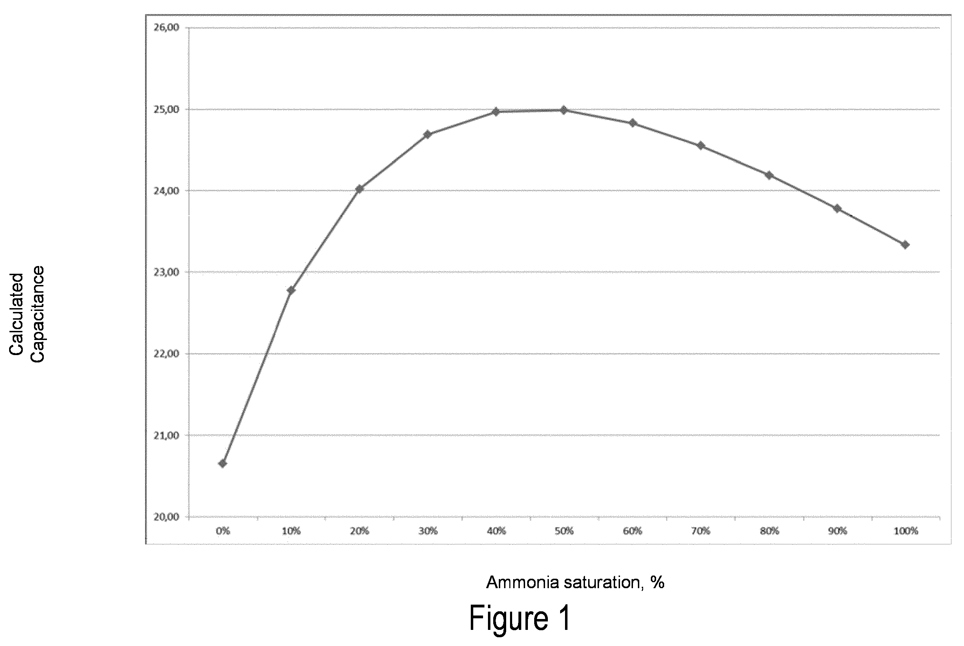

The present invention is based *inter alia* on the insight of the inventor that there is a compensatory effect of dielectric constant change with electrode separation change upon the observed capacitance, which results in a maximum being observed in the dependence of observed capacitance upon degree of gas (e.g. ammonia) saturation, see Figure 1. As a result, the observed capacitance and the dielectric constant calculated therefrom cannot necessarily be uniquely associated with a particular degree of gas, e.g. ammonia, absorption. The inventor has found that it is possible to remove the ambiguity in the result obtained from a capacitance measurement alone, by judiciously adding a measurement of the (change in) dimensions of the solid storage medium. Accordingly, the invention is able to provide a method of unambiguously determining the level of gas saturation in a solid medium using the capacitance of the solid medium, which generates a dielectric constant which is monotonically dependent upon the level of gas saturation (see Figure 3).

The present invention relates to sensing the level of gas saturation, for example of ammonia, in solid storage materials in a storage container, for example a plastic container. The level of gas saturation is determined unambiguously from the dependence of the dielectric constant upon the level of gas saturation and the dielectric constant of the storage material calculated from the measured capacitance of capacitor created by solid material as dielectric and the measured dimensions of the solid storage material, thereby rendering the measure of ammonia saturation by the solid medium insensitive to dimensional variations in the solid medium.

According to an aspect of the present invention, there is provided a gas-supply device comprising: a solid storage medium consisting of at least one pellet comprising an alkaline earth halide-gas complex, the pellet being produced by a unidirectional application of pressure; a heating source for the at least one pellet, the heating source and the at least one pellet being arranged so as to allow the at least one pellet to discharge stored gas upon being heated; and a system for determining the quantity of gas in the solid storage medium as described above.

It is an advantage of this embodiment that it takes into account the specific expansion/contraction characteristics of storage media that have been produced under unidirectional pressure, thus simplifying the measurement of the dimensions of the medium by requiring only a single measurement.

In an embodiment of the gas-supply device according to the present invention, the unidirectional pressure is at least 30 MPa.

It has been found that a pressure of at least 30 MPa is suitable for obtaining a suitable expansion/contraction characteristic that is substantially one-dimensional. Higher pressures, such as at least 50 MPa, may advantageously be used.

In an embodiment of the gas-supply device according to the present invention, the measurement device is arranged to measure the dimension of the solid storage medium in the direction of the unidirectional compression; and the capacitance sensor is arranged to sense the capacitance in the direction the unidirectional compression.

It is advantageous to measure the capacitance across the smallest inter-electrode distance, because this results in a higher capacitance, the variations of which are more easily discernable. Depending on the form factor of the solid storage medium, the direction of this smallest inter-electrode may coincide with the direction of unidirectional compression. When this is the case, the estimation of the dielectric constant is not only more accurate but also particularly easy to calculate, given the linear relationship between inter-electrode distance and dielectric constant (for a given constant capacitance).

In an embodiment of the gas-supply device according to the present invention, the measurement device is arranged to measure the dimension of the solid storage medium in the direction of the unidirectional compression; and the capacitance sensor is arranged to sense the capacitance in a direction substantially perpendicular to the direction the unidirectional compression.

It is advantageous to measure the capacitance across the smallest inter-electrode distance, because this results in a higher capacitance, the variations of which are more easily discernable. Depending on the form factor of the solid storage medium, the direction of this smallest inter-electrode may be perpendicular to the direction of unidirectional compression. When this is the case, the formula or look-up table relating the measured capacitance to the dielectric constant must be adapted accordingly.

According to an aspect of the present invention, there is provided a vehicle comprising at least one function requiring a supply of gas for its operation, the at least one function being operatively connected to a gas-supply device as described above.

The use of solid storage media for gas storage onboard vehicles is particularly advantageous from the point of view of safety, maintenance, and convenience of charging/discharging.

In an embodiment of the vehicle according to the present invention, the at least one function comprises a selective catalytic reduction system for treating exhaust gas of an internal combustion engine, and the gas in the solid storage medium comprises ammonia.

In an embodiment of the vehicle according to the present invention, the at least one function comprises an internal combustion engine, and the gas in the solid storage medium is a combustible gas.

According to an aspect of the present invention, there is provided a method for determining the quantity gas in a solid storage medium, the method comprising: measuring a dimension of the solid storage medium; sensing a capacitance of the solid storage medium; determining a dielectric constant of the solid storage medium from the capacitance and the dimension; and determining the quantity of gas in the solid storage medium on the basis of the dielectric constant.

In an embodiment of the method according to the present invention, the solid storage medium consists of at least one pellet comprising an alkaline earth halide-gas complex, the pellet being produced by a unidirectional application of pressure; the measuring comprises measuring the dimension of the at least one pellet in the direction in which unidirectional pressure was applied; and the sensing comprises sensing the capacitance of the at least one pellet in the direction in which unidirectional pressure was applied.

In an embodiment of the method according to the present invention, the solid storage medium consists of at least one pellet comprising an alkaline earth halide-gas complex, the pellet being produced by a unidirectional application of pressure; the measuring comprises measuring the dimension of the at least one pellet in the direction in which unidirectional pressure was applied; and the sensing comprises sensing the capacitance of the at least one pellet in a direction substantially perpendicular to the direction in which unidirectional pressure was applied.

The technical effects and advantages of embodiments of the vehicle and the method according to the present invention correspond, *mutatis mutandis,* to those of the corresponding embodiments of the gas-supply device according to the present invention.

**Brief Description of the Figures**

These and other aspects and advantages of the present invention will now be described in more detail with reference to the accompanying drawings, in which:

- Figure 1 is a dependence of calculated capacitance as a function of the percentage ammonia saturation for an electrode surface of 0.002 $m^2$, a distance between electrodes at 0% ammonia of 6 mm and a distance between electrodes at 100% ammonia saturation of 11 mm, a dielectric constant without ammonia absorption of 7 and a dielectric constant with 100% ammonia saturation of 14.5;
- Figure 2 shows the implementation of the present invention in series, 1 being the container, 2 being a thermally and electrically conductive material and 3 being wafers of solid gas storage material;
- Figure 3 shows the dependence of dielectric constant upon percentage ammonia saturation; and
- Figure 4 shows the implementation of the present invention in parallel, **1** being the container, **2** being a thermally and electrically conductive material, **3** being wafers of solid gas storage material, and **4** being electrically insulating thermal conductive material.

**Description of Embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects.

This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

It is to be understood that although preferred embodiments, specific constructions and configurations, as well as materials, have been discussed herein for devices according to the present invention, various changes or modifications in form and detail may be made without departing from the scope and spirit of this invention. Steps may be added or deleted to methods described within the scope of the present invention.

### System

An aspect of the present invention pertains to a system for determining the quantity of gas in a solid storage medium, the system comprising: a capacitance sensor for sensing the capacitance of the solid storage medium; a measurement device for measuring a dimension of the solid storage medium; and processing means, operatively connected to the capacitance sensor and the measurement device, the processing means being configured to determine a dielectric constant of the solid storage medium from the capacitance and the dimension; wherein the processing means is further configured to determine the quantity of gas in the solid storage medium on the basis of the dielectric constant.

The measurement device may be any suitable measurement device known to the skilled person, in particular any electronic measurement device. The measurement of the relevant dimension(s) of the solid storage medium may be a direct measurement or an indirect measurement, i.e. the measurement device may be arranged to measure the relevant dimension(s) of the solid storage medium itself, or to measure the free space in the (fixed-size) container in which the solid storage medium is held and in which it is able to expand and compact. It should be noted that this "free" space may be filled with air or another compressible gas, optionally compartmentalized in air pockets or air bags. To avoid undesired movement of the solid storage material (apart from its expansion and contraction), the "free" space may optionally be filled a sponge-like material, a foam, or the like.

The capacitance sensing device may be any suitable capacitance sensing device known to the skilled person, including devices that measure complex impedance by applying a periodically varying voltage to the electrodes, and devices that integrate an amount of charge accepted or released by the capacitor for a given voltage level.

The relevant dimension to be measured depends on the way the capacitance-sensing capacitor is arranged, i.e. on the location and geometry of the electrodes. If the solid storage medium is substantially cylindrically shaped and produced so as to expand and contract along the axial direction upon gas absorption and desorption, respectively), the electrodes may be arranged at the top and bottom of the cylinder. Alternatively, the capacitor may be formed of a central electrode and a peripheral electrode, in which case the relevant dimension would be the radius of the cylinder if we assume that the medium undergoes radial expansion and contraction.

The processing means may be implemented in dedicated hardware (e.g., ASIC), configurable hardware (e.g., FPGA), programmable components (e.g., a DSP or general purpose processor with appropriate software), or any combination thereof. The same component(s) may also include other functions.

The determining of the quantity of gas in the solid storage medium on the basis of the dielectric constant may take place by reference to a look-up table or by performing a calculation on the basis of a predetermined formula. The skilled person will be able to produce the necessary table or formula by performing routine experiments on solid storage media having different levels of saturation.

### Gas-supply device

An aspect of the present invention pertains to a gas-supply device comprising: a solid storage medium consisting of at least one pellet comprising an alkaline earth halide-gas complex, the pellet being produced by a unidirectional application of pressure; a heating source for the at least one pellet, the heating source and the at least one pellet being arranged so as to allow the at least one pellet to discharge stored gas upon being heated; and a system for determining the quantity of gas in the solid storage medium as described above.

When the solid storage medium consists of at least one pellet, measuring the relevant dimension(s) of the solid storage medium corresponds to measuring the corresponding dimension(s) of the at least one pellet. For example, if the pellets are stacked (assuming that adequate wiring is provided to create a parallel or serial capacitor circuit, see examples below), the relevant dimension may be the height of each pellet in the stack, which may be determined by measuring the height of the total stack and dividing it by the number of pellets, or by measuring the respective heights of the individual pellets in the stack.

According to a preferred embodiment of the gas-supply device according to the present invention, said unidirectional pressure is at least 50 MPa.

According to another preferred embodiment of the gas-supply device according to the present invention, said measuring of said dimension of said pellet is performable in the direction of the unidirectional compression; said measuring of said capacitance is performable in the direction of the unidirectional compression; and (with knowledge of the other dimensions of the pellet and the electrode contact area) the dielectric constant thereof is calculable from which the quantity of gas is determinable by calculation or by using a look-up table.

According to another preferred embodiment of the gas-supply device according to the present invention, said measuring of said dimension of said pellet is performable in the direction of the unidirectional compression; said measuring of said capacitance is performable in a direction substantially perpendicular to that of the unidirectional compression; and (with knowledge of the other dimensions of the pellet and the electrode separation) the dielectric constant calculable from which the quantity of gas is determinable by calculation or by using a look-up table.

The gas supply device may comprise at least one storage system which comprises at least one inlet port and at least one outlet port. Flushing gas may be circulated from the inlet port(s) to the outlet port(s) such that the flushing gas flows through the pellets comprising an alkaline earth halide-gas complex. The step of circulating a flushing gas is performed during the loading or reloading of the pellets with gas.

Process

An aspect of the present invention pertains to a method for determining the quantity gas in a solid storage medium, the method comprising: measuring a dimension of the solid storage medium; sensing a capacitance of the solid storage medium; determining a dielectric constant of the solid storage medium from the capacitance and the dimension; and determining the quantity of gas in the solid storage medium on the basis of the dielectric constant.

According to a preferred embodiment of the method of the present invention, said unidirectional pressure is at least 30 MPa, with at least 50 MPa being more preferred.

According to another preferred embodiment of the method of the present invention, said capacitance and said at least one dimension of said pellet are measured in the direction of the unidirectional compression.

According to another preferred embodiment of the method of the present invention, said at least one dimension of said pellet is measured in the direction of the unidirectional compression and said capacitance is measured in a direction substantially perpendicular to said direction of unidirectional compression.

According to another preferred embodiment of the method of the present invention, said process further comprises the step of saturating said pellet with said gas and determining the dimensional change of said pellet in said direction of compression as a function of gas loss upon heating; and saturating said pellet with said gas and determining the capacitance with electrodes substantially perpendicular to the direction of unidirectional compression, or with electrodes parallel to the direction of unidirectional compression as a function of gas loss upon heating and therefrom with knowledge of the other dimensions of the pellet and either the electrode contact area or the electrode separation depending on whether the electrodes are substantially perpendicular to or substantially parallel with the electrode contact area the change in dielectric constant to provide said look-up table.

Method for producing a pellet

A further aspect of the present invention pertains to a method for producing a pellet comprising an alkaline earth halide-gas complex, said method comprising the steps of: preparing said alkaline earth halide-gas complex; filling a mould with at least said thereby prepared alkaline earth halide-gas complex; unidirectionally applying pressure of at least 30 MPa to the contents of said mould thereby producing said pellet; and removing said pellet from said mould.

According to a preferred embodiment of the pellet production method of the present invention, said alkaline earth halide is an alkaline earth chloride.

According to a preferred embodiment of the pellet production method of the present invention, said alkaline earth halide is magnesium chloride, calcium chloride, strontium chloride or barium chloride, with calcium chloride, strontium chloride or barium chloride being particularly preferred.

According to a preferred embodiment of the pellet production method of the present invention, said gas is ammonia.

According to another preferred embodiment of the pellet production method of the present invention, said unidirectional pressure is at least 50 MPa.

EXAMPLES

Example 1: implementation in series

The wafers of solid ammonia storage material were produced by unidirectionally applying a force of 60 kN over a cross-section of 0.002 $m^2$ providing a pressure of 30 MPa.

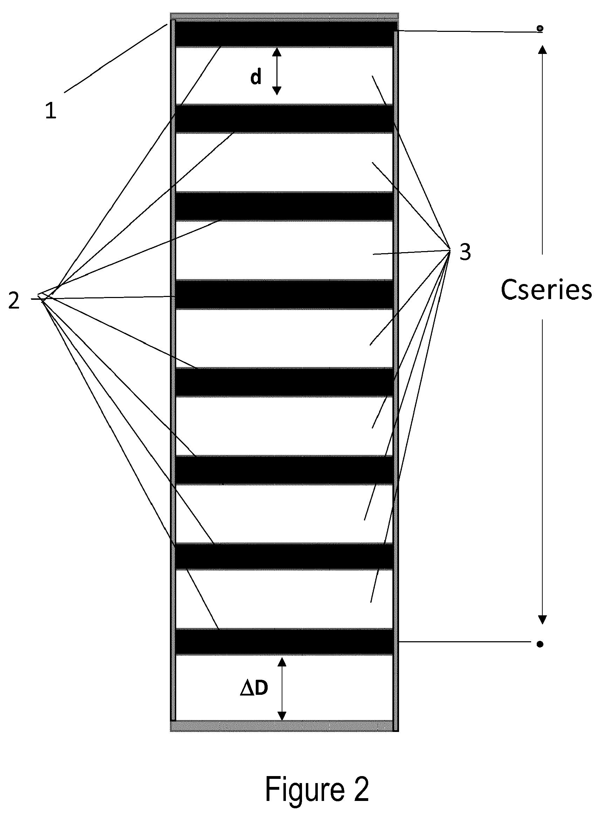

Figure 2 shows schematically n capacitors in series in the container (with n = 6) and at 0% ammonia saturation with six wafers of solid ammonia storage material each having a thickness, do, of 6 mm exhibited a series capacitance, $C_{series,0}$, of 3.44 pF and an increase in the dimension of the stack $\Delta D$ of 0 mm. Hence, $\Delta D/n$ value was 0 mm and $d = do + \Delta D/n = 6$ mm. The capacitance, Co, of each of the six capacitors, C, is 3.44 x 6 = 20.65 pF. Since, the contact area was 0.002 $m^2$ and $\varepsilon_0$ is 8.854 187 817 x $10^{-12}$ F/m $K = \varepsilon_0$ x $A = 1.77$ x $10^{-14}$ Fm.

Hence,

$$\varepsilon_{r,0} = (C_0 \ \times \ d_0)/K$$
$$= (20.65 \ \times \ 10^{-12} \ \times \ 6 \ \times \ 10^{-3})/1.77 \ \times \ 10^{-14} = 7.0$$

For 50% ammonia saturation of the solid medium a $C_{series,50}$ of 4.165 nF was measured and the measured increase in the stack dimension , $\Delta D$, was 30 mm, giving a $\Delta D/n$ value of 15/6 = 2.5 mm. Hence, $d = d_0 + \Delta D/n = 6 + 2.5 = 8.5$ mm. The capacitance, $C_{50}$, of each of the capacitors upon 50% ammonia saturation was 4.165 x 6 = 24.99 pF.

Hence,

$$\varepsilon_{r,50} = (C_{50} \ \times \ d_{50})/K$$
$$= (24.99 \ \times \ 10^{-12} \ \times \ 8.5 \ \times \ 10^{-3})/1.77 \ \times \ 10^{-14} = 12.0$$

For 100% ammonia saturation of the solid medium a $C_{series, 100}$ of 3.89 nF was measured and the measured increase in the stack dimension, $\Delta D$, was 30 mm, giving a $\Delta D/n$ value of 30/6 = 5 mm. Hence, $d = do + \Delta D/n = 6 + 5 = 11$ mm. The capacitance, $C_{100}$, of each of the capacitors upon 100% ammonia saturation was 3.89 x 6 = 23.33 pF.

Hence,

$$\varepsilon_{r,100} = (C_{100} \ \times \ d_{100})/K$$
$$= (23.33 \ \times \ 10^{-12} \ \times \ 11 \ \times \ 10^{-3})/1.77 \ \times \ 10^{-14} = 14.5$$

The dependence of dielectric constant, $\varepsilon_r$, upon percentage ammonia saturation is shown in Figure 3. If the capacitance as a function of percentage ammonia saturation is relied upon, a maximum is observed, as shown in Figure 1 and the fact that the capacitance for 50% ammonia absorption of 24.99 pF, is higher than that for 100% ammonia absorption of 23.33 pF. This means that the observed capacitance and the dielectric constant calculated therefrom cannot necessarily be uniquely associated with a particular degree of gas absorption,

Example 2: implementation in parallel

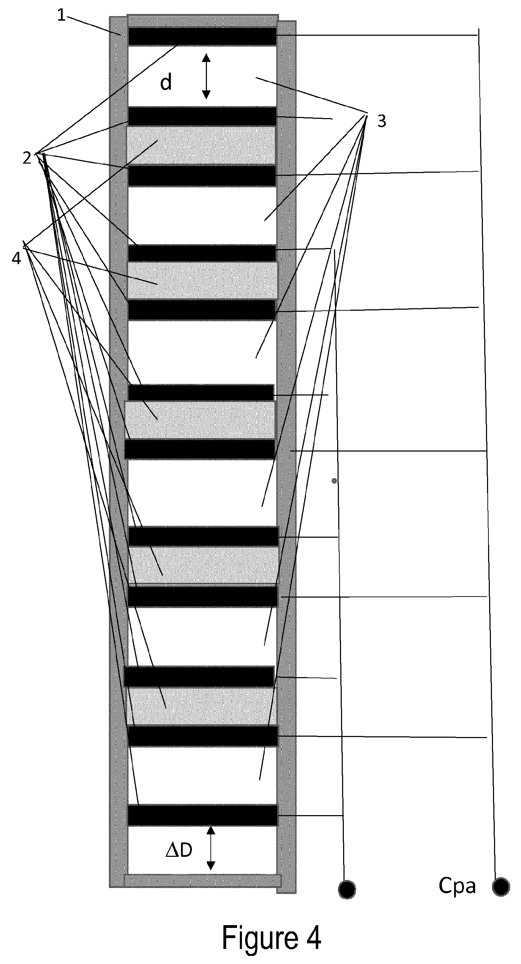

Figure 4 shows schematically n capacitors in parallel in the container (with n = 6) and at 0% ammonia saturation with six wafers of the solid ammonia storage material described in Example 1 each with a thickness, do, of 6 mm exhibited a parallel capacitance, $C_{par,0}$, of 123.94 pF and an increase in the dimension of the stack $\Delta D$ of 0mm. Hence, $\Delta D/n$ value was 0 mm and $d = d_0 + \Delta D/n = 6$ mm. The capacitance of each of the six capacitors, Co, is 123.94/6 = 20.65 pF. An advantage of this parallel set-up over the series set-up of Example 1, is that the combined capacitance to be measured is higher, leading to a more accurate estimate of the average capacitance per wafer.

Hence, $\varepsilon_r = (C \times d)/K = (20.65 \times 10^{-12} \times 6 \times 10^{-3})/1.77 \times 10^{-14} = 7.0$ For 100% ammonia saturation of the solid medium a $C_{par, 100}$, of 139.99 nF was measured and the measured increase in the stack dimension, $\Delta D$, was 30 mm, giving a $\Delta D/n$ value of 30/6 = 5 mm. Hence, $d = d_0 + \Delta D/n = 6 + 5 = 11$ mm. The capacitance, $C_{100}$, of each of the capacitors upon 100% ammonia saturation was 139.99/6 = 23.33 pF.

Hence,

$$\varepsilon_{r,100} = (C_{100} \times d_{100})/K$$
$$= (23.33 \times 10^{-12} \times 11 \times 10^{-3})/1.77 \times 10^{-14} = 14.5$$

### Claims

1. A system for determining the quantity of ammonia gas in a solid storage medium, the system comprising:

   - a capacitance sensor for sensing the capacitance of said solid storage medium;
   - a measurement device for measuring a dimension of said solid storage medium; and
   - processing means, operatively connected to said capacitance sensor and said measurement device, said processing means being configured to determine a dielectric constant of said solid storage medium from said capacitance and said dimension;

   wherein said processing means is further configured to determine said quantity of ammonia gas in said solid storage medium on the basis of said dielectric constant.

2. A gas-supply device comprising:

   - a solid storage medium consisting of at least one pellet comprising an alkaline earth halide-gas complex, said pellet being produced by a unidirectional application of pressure;
   - a heating source for said at least one pellet, the heating source and the at least one pellet being arranged so as to allow the at least one pellet to discharge stored gas upon being heated; and
   - a system for determining the quantity of gas in said solid storage medium according to claim 1.

3. The gas-supply device according to claim 2,
   wherein said measurement device is arranged to measure said dimension of said solid storage medium in the direction of said unidirectional compression; and
   wherein said capacitance sensor is arranged to sense said capacitance in the direction said unidirectional compression.

4. The gas-supply device according to claim 2,
   wherein said measurement device is arranged to measure said dimension of said solid storage medium in the direction of said unidirectional compression; and
   wherein said capacitance sensor is arranged to sense said capacitance in a direction substantially perpendicular to the direction said unidirectional compression.

5. A vehicle comprising at least one function requiring a supply of gas for its operation, said at least one function being operatively connected to a gas-supply device according to any one of claims 2 to 4.

6. The vehicle according to claim 5, wherein said at least one function comprises a selective catalytic reduction system for treating exhaust gas of an internal combustion engine, and wherein said gas in said solid storage medium comprises ammonia.

7. The vehicle according to claim 5, wherein said at least one function comprises an internal combustion engine, and wherein said gas in said solid storage medium is a combustible gas.

8. A method for determining the quantity gas in a solid storage medium, the method comprising:

   measuring a dimension of said solid storage medium;

sensing a capacitance of said solid storage medium;

determining a dielectric constant of said solid storage medium from said capacitance and said dimension; and

determining said quantity of gas in said solid storage medium on the basis of said dielectric constant.

9. The method according to claim 8,

wherein said solid storage medium consists of at least one pellet comprising an alkaline earth halide-gas complex, said pellet being produced by a unidirectional application of pressure;

wherein said measuring comprises measuring the dimension of said at least one pellet in the direction in which unidirectional pressure was applied; and

wherein said sensing comprises sensing the capacitance of said at least one pellet in the direction in which unidirectional pressure was applied.

10. The method according to claim 8,

wherein said solid storage medium consists of at least one pellet comprising an alkaline earth halide-gas complex, said pellet being produced by a unidirectional application of pressure;

wherein said measuring comprises measuring the dimension of said at least one pellet in the direction in which unidirectional pressure was applied; and

wherein said sensing comprises sensing the capacitance of said at least one pellet in a direction substantially perpendicular to the direction in which unidirectional pressure was applied.

Figure 1

Ammonia saturation, %

Calculated Capacitance

Figure 2

Figure 3

Figure 4

Europäisches
Patentamt

European
Patent Office

Office européen
des brevets

## EUROPEAN SEARCH REPORT

Application Number

EP 16 30 5354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2012/049852 A1 (WIDMANN RALF [DE] ET AL) 1 March 2012 (2012-03-01) * the whole document * ----- | 5-7 | INV. G01N27/22 |
| X,D | US 2014/216010 A1 (AUDOUIN ARNAUD [FR]) 7 August 2014 (2014-08-07) * the whole document * ----- | 5-7 | |
| A | US 6 833 272 B1 (BINDER KLAUS [DE] ET AL) 21 December 2004 (2004-12-21) * the whole document * ----- | 1-10 | |

TECHNICAL FIELDS
SEARCHED      (IPC)

G01N
B01D

The present search report has been drawn up for all claims

| Place of search | Date of completion of the search | Examiner |
|---|---|---|
| Munich | 7 September 2016 | Klein, Marc-Oliver |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 16 30 5354

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2016

| Patent document cited in search report | | Publication date | Patent family member(s) | | Publication date |
|---|---|---|---|---|---|
| US 2012049852 | A1 | 01-03-2012 | DE 102009022884 | A1 | 02-12-2010 |
| | | | EP 2435821 | A1 | 04-04-2012 |
| | | | US 2012049852 | A1 | 01-03-2012 |
| | | | WO 2010136277 | A1 | 02-12-2010 |
| US 2014216010 | A1 | 07-08-2014 | CN 103597180 | A | 19-02-2014 |
| | | | EP 2522823 | A1 | 14-11-2012 |
| | | | JP 2014516128 | A | 07-07-2014 |
| | | | KR 20140045944 | A | 17-04-2014 |
| | | | US 2014216010 | A1 | 07-08-2014 |
| | | | WO 2012156371 | A1 | 22-11-2012 |
| US 6833272 | B1 | 21-12-2004 | DE 19931007 | A1 | 25-01-2001 |
| | | | FR 2796154 | A1 | 12-01-2001 |
| | | | IT RM20000346 | A1 | 27-12-2001 |
| | | | US 6833272 | B1 | 21-12-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006081824 A
- US 20140216010 A
- US 20120049852 A